**Europäisches Patentamt**

**European Patent Office**

**Office européen des brevets**

(19)

(11) Publication number : **0 364 196 B1**

(12)

# EUROPEAN PATENT SPECIFICATION

(45) Date of publication of patent specification :
**18.01.95 Bulletin 95/03**

(51) Int. Cl.⁶ : **G11B 11/10**

(21) Application number : **89310310.1**

(22) Date of filing : **09.10.89**

---

(54) **Magneto-optical recording medium having a record layer and a readout layer each containing Cr.**

---

(30) Priority : **11.10.88 JP 256316/88**

(43) Date of publication of application :
**18.04.90 Bulletin 90/16**

(45) Publication of the grant of the patent :
**18.01.95 Bulletin 95/03**

(84) Designated Contracting States :
**DE FR GB IT NL**

(56) References cited :
**PATENT ABSTRACTS OF JAPAN, vol. 12, no.
224 (P-721)[3071], 25th June 1988, page138 P
721; & JP-A-63 18 545 (CANON INC.) 26-
01-1988
PATENT ABSTRACTS OF JAPAN, vol. 12, no.
366 (P-765)[3213], 30th September 1988,page
131 P 765; & JP-A-63 117 355 (CANON INC.)
21-05-1988; & US-A-4842 946 (TADASHI
KOBAYASHI) 27-06-1989**

(73) Proprietor : **CANON KABUSHIKI KAISHA
30-2, 3-chome, Shimomaruko,
Ohta-ku
Tokyo (JP)**

(72) Inventor : **Kobayashi, Tadashi 202 Furunesu
Jiyugaoka
17-18, Jiyugaoka 2-chome
Meguro-ku
Tokyo (JP)**

(74) Representative : **Beresford, Keith Denis Lewis
et al
BERESFORD & Co.
2-5 Warwick Court
High Holborn
London WC1R 5DJ (GB)**

**EP 0 364 196 B1**

## Description

## BACKGROUND OF THE INVENTION

### Field of the Invention

The present invention relates to a magneto-optical recording medium suitable for use with an information memory system such as a computer external memory and an image file.

### Related Background Art

A magneto-optical recording medium with uses a rare earth-iron group amorphous alloy thin film does not offer a sufficient durability and poses problems of selective oxidization of a rare earth element, surface oxidization of a magnetic film and hole erosion. Various improvements have been proposed for the above problems. One of them is addition of an element to improve the durability of the magnetic film itself. (For example, Journal of Institute of Applied Magnetics of Japan, 9 (1985) 93). Examples of elements to be added are Cr, Al, Ti, Ni, Co and Pt.

The magneto-optical recording medium which uses the rare earth-iron group amorphous alloy thin film also does not offer a sufficient readout characteristics, and various proposals to improve it have been made. For example, USP, 4,799,114 teaches an exchange coupled two-layer magnetic film which has a film (record layer) having a good recording characteristic and a film (readout layer) having a good readout characteristic. In the prior art exchange coupled two-layer magnetic film, Tb-Fe, Dy-Fe, Tb-Fe-Co or Dy-Fe-Co is used as the record layer, and Gd-Fe, Gd-Co, Gd-Fe-Co or Tb-Fe-Co is used as the readout layer.

The addition of Cr is best from the standpoint of the improvement of durability, but it poses problems of lowering the Curie point and reducing the magneto-optical effect. As the Curie point is lowered, the recording sensitivity rises but the stability of the recorded information for the temperature rise decreases. Accordingly, unnecessary reduction of the Curie point is not desirable. The reduction of the magneto-optical effect is also not desirable because it deteriorates the readout characteristic.

Another element to improve the durability is Co, but the effect of improving the durability is lower than that of Cr. Although the magneto-optical effect is increased, it accompanies with the rise of the Curie point, which causes the reduction of the recording sensitivity.

When both elements Cr and Co are added, the drop of the Curie point due to the addition of Cr may be prevented by the addition of Co, but the magneto-optical effect is still reduced even if the Curie point does not change.

Accordingly, in order to suppress the reduction of the magneto-optical effect within a practically acceptable range, Cr should not be added too much. As a result, the durability is not sufficiently improved.

In the rare earth-iron group amorphous alloy thin film, it has been known that the more the iron group element includes Co, the more is the durability (particularly prevention of the hole erosion) improved. In the exchange coupled two-layer magnetic film, Tb-Fe-Co which includes a large quantity of Co may be used because the Curie point of the readout layer may be unlimitedly high. Thus, the readout characteristic is improved and the durability is also improved to some extent. However, the record layer uses Tb-Fe or Dy-Fe. If Co is added thereto even a small amount, the Curie point materially rises and the recording sensitivity is lowered.

Accordingly, in the exchange coupled two-layer film, the improvement of the durability has not been done sufficiently.

The improvement of stability of the recorded information is now discussed.

In the magneto-optical recording medium, not only the recording/reproducing characteristic but also the stability of the record are important factors, as they are in other recording media. When the stability of the recorded information is discussed, it is necessary to consider the stability at a room temperature as well as that at a temperature slightly higher than the room temperature, because the temperature in a drive unit for the magneto-optical memory may rise up to 50 - 60°C as various heat generating elements are located in the drive unit and the rise of the temperature of the medium to some extent by the laser beam is unavoidable though the information is read by irradiating the laser beam which is weak enough to cause recording of the information, to the medium. Further, depending on the operation of the drive unit, the information must be read out while the recording/erasing biasing magnetic field is applied. Accordingly, it is necessary that the recorded information is stable even if the temperature of the medium which is in the drive unit of 50 - 60°C is further raised by the readout light under the application of the biasing magnetic field.

The exchange coupled two-layer film which uses the rare earth-iron group amorphous alloy for which the above characteristic is required is classified into for major classes.

(1) Rare earth sub-lattice magnetization is dominant in the record layer, and rare earth sub-lattice magnetization is dominant in the readout layer.

(2) Iron gorup sub-lattice magnetization is dominant in the record layer, and rare earth sub-lattice magnetization is dominant in the readout layer.

(3) Iron group sub-lattice magnetization is dominant in the record layer, and iron group sub-lattice magnetization is dominant in the readout layer.

(4) Rare earth sub-lattice magnetization is dominant in the record layer, and iron group sub-lattice magnetization is dominant in the readout layer.

In the media (1) and (2) in which the rare earth sub-lattice magnetization is dominant in the readout layer, the recording/reproducing characteristic is not sufficient. Comparing the media (1) and (2) with the media (3) and (4), the recording/reproducing characteristics are good but the stabilities of record are different from each other.

In general, in the exchange coupled two-layer film, the magnetization process (coercive force) of each layer changes materially compared to a single-layer film because of the exchange interaction between the two layers. A magnetic field of magnetization reversal changed by forming the two layers is called an apparent coercive force. In the combinations of the record layer and the readout layer under consideration, the apparent coercive force of the readout layer increases in either one of the media (3) and (4) and the stability of the recorded information in the readout layer is improved.

However, the magnetization process of the record layer also changes by the exchange interaction from the readout layer. In the medium (3), the apparent coercive force decreases compared to the single-layer film, and in the medium (4), the apparent coercive force increases. Accordingly, in the medium (3), there is a problem in the stability of the recorded information. In the medium (4), from the standpoint of the recording/reproducing characteristic, the record layer is preferably the rare earth-iron group amorphous alloy which has a compensation temperature between a room temperature and the Curie point and which has dominant rare earth sub-lattice magnetization. But, since this medium changes to a similar magnetism as that of the medium (3) at a temperature between the compensation temperature and the Curie point, there is a problem in the stability of the recorded information in this temperature range.

Thus, the stability of record is fairly improved in the medium (4) compared to the medium (3) but the problem arises in the above temperature range, and it is still not insufficient for practical use.

Reference is made to the Applicants' copending European patent application number 89310351.5 published as EP-A-0364212.

Patent Abstracts of Japan, Volume 12, No. 224 (P-721) [3071], published 25 June 1988, Page 138 P271, corresponding to Japanese Patent Application JP-A-6318545, discloses a magneto-optical recording medium having a two layered magnetic structure in which the readout layer has a high Curie temperature and a low coercive force at room temperature. The recording layer consists of an amorphous alloy having the composition R-Fe-Co-M where R is at least one of Tb and Dy and M is either Cr or Al. The reproducing layer is composed of GdFeCo.

Patent Abstracts of Japan, Volume 12, No. 366 (P-765) [3213], published 30 September 1988, Page 131 P765, corresponding to Japanese Patent Application JP-A-63117355, discloses a magneto-optical recording medium having a three layer structure. The readout layer is chosen from the materials Gd-Fe, GdFe-Co, Gd-Co and Cr, Al.

## SUMMARY OF THE INVENTION

It is an object of the present invention to provide a magneto-optical recording medium which resolves the problems encountered in the prior art media, which has good information recording and reproducing characteristics and which provides high durability and high stability of recorded information.

The above object of the present invention is attained by a magneto-optical recording medium comprising:

a first magnetic layer mainly concerned with recording; and

a second magnetic layer said second magnetic layer being mainly concerned with reproduction, said second magnetic layer being exchange-coupled to said first magnetic layer and having a higher Curie point and a lower coercive force at room temperature than those of said first magnetic layer,

characterised in that:

said first magnetic layer consists of an amorphous alloy having a composition of:

$$((Tb_{1-x}Dy_x)_z(Fe_{1-y}Co_y)_{1-z})_{1-w}Cr_w$$

wherein $0 \leqq x \leqq 1$, $0 \leqq y \leqq 0.5$, $0.1 \leqq z \leqq 0.4$, $0.01 \leqq w \leqq 0.3$; and

said second magnetic layer comprises of an amorphous alloy having a composition of:

$$((Tb_{1-x}Dy_x)_z(Fe_{1-y}Co_y)_{1-z})Cr_w$$

wherein $0 \leqq x \leqq 1$, $0.1 \leqq y \leqq 1$, $0.1 \leqq z \leqq 0.21$, $0 < w \leqq 0.15$, or

$$((Gd_{1-x}R_x)_z(Fe_{1-y}Co_y)_{1-z})_{1-w}Cr_w$$

wherein R is at least one element selected from Tb and Dy, and $0.1 \leqq x \leqq 0.9$, $0.1 \leqq y \leqq 1$, $0.1 \leqq z \leqq 0.22$, $0 < w \leqq 0.15$,

and that the composition ratio of Co in said first magnetic layer is less than that in said second magnetic layer, and

the composition ratio of Cr in said first amorphous magnetic layer is greater than the composition ratio of Cr in said second magnetic layer.

## BRIEF DESCRIPTION OF THE DRAWING

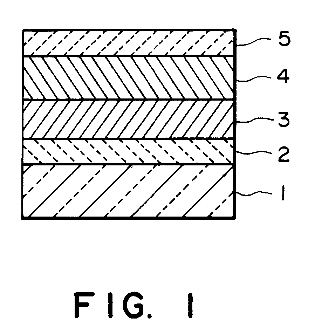

Fig. 1 shows a schematic sectional view of one embodiment of a magneto-optical recording medium of the present invention.

## DESCRIPTION OF THE PREFERRED EMBODIMENTS

Fig. 1 shows a schematic sectional view of one embodiment of the magneto-optical recording medium of the present invention. Numeral 1 denotes a transparent substrate made of glass or plastics. An underlying layer 2 made of a dielectric material such as $Si_3N_4$ is formed on the substrate 1 to offer an interference effect and an anti-erosion effect. A second magnetic layer 3 which serves as a readout layer and a first magnetic layer 4 which serves as a record layer and which has a higher coercive force at a room temperature and a lower Curie point than those of the second magnetic layer 3 are formed on the underlying layer 2. Those magnetic layers are continuously formed without breaking a vacuum condition in the manufacturing process of the medium, and are exchange coupled to each other. A protective layer 5 made of a dielectric material such as $Si_3N_4$ is formed on the first magnetic layer 4 in order to prevent the erosion of the magnetic layers.

The improvement of the durability in the above meidum is first discussed.

In the exchange coupled two-layer film, it is necessary that the record layer has an appropriately low Curie point, but since the record layer does not relate to the readout, the magneto-optical effect may be unlimitedly low. On the other hand, the readout layer must has a large magneto-optical effect but the Curie point may be unlimitedly high because the readout layer does not relate to the recording.

In the present invention, based on the above consideration, Co is added in a small amount and Cr is added in a large amount in the record layer so that the Curie point is kept unchanged to attain high durability effect though the magneto-optical effect is reduced. The reduction of the magneto-optical effect does not affect to the readout characteristic.

On the other hand, Co is added in a large amount and Cr is added in a small amount in the readout layer so that the magneto-optical effect is kept unchanged to attain high durability effect though the Curie point rises. The rise of the Curie point does not affect to the recording sensitivity.

The material of the record layer is preferably R-Fe-Co-Cr (where R is Tb and/or Dy). By using Tb or Dy which is in a non-S state as the rare earth element, a large coercive force is attained. A preferable composition in atomic number ratio is

$$\{(Tb_{1-x}Dy_x)_z(Fe_{1-y}Co_y)_{1-z}\}_{1-w}Cr_w$$

where $0 \leqq x \leqq 1$, $0 < y \leqq 0.5$, $0.1 \leqq z \leqq 0.4$ $0.01 < w \leqq 0.3$ A thickness of the film is preferably 100 - 2000 Å. A relationship of

$$Tc = 130(1-x) + 70x + (400 \sim 600)y - 500W \quad (°C)$$

was attained among the Curie point Tc of the record layer, the atomic number ratio x of Dy, the atomic number ratio y of Co and the atomic number ratio w of Cr.

Thus, x, y and w may be appropriately selected so that a desried Curie point of the record layer is attained.

In the magneto-optical memory, since the information is recorded by utilizing the thermal action of the laser beam, the recording sensitivity rises as the Curie point of the magnetic film falls. Since it is the Curie point of the record layer that determines the recording sensitivity in the exchange coupled two-layer magnetic film, the recording sensitivity increases as the Curie temperature of the record layer falls. However, from the standpoint of the stability of the recorded information, the Curie point of the record layer should not be lowered too much. From the standpoint of the stability of the recorded information, it is necessary to consider the stability at the room temperature as well as the stability at a temperature slightly higher than the room temperature, for the reasons mentioned before. From those considerations, the Curie point of the record layer is preferably 150 $\sim$ 200°C.

A suitable material for the readout layers is Gd-Fe-Co-Cr. By using Gd which is in a S state as the rare earth element, it is possible to reduce the coercive force. A composition in atomic number ratio is preferably

$$\{Gd_z(Fe_{1-y}Co_y)_{1-z}\}_{1-w}Cr_w$$

where $0.1 < y < 1$, $0.1 \leqq z \leqq 0.4$, $0 < w \leqq 0.15$, and the proportion of Co in the record layer is smaller than the proportion of Co in the readout layer, and the proportion of Cr in the record layer is larger than the proportion of Cr in the readout layer. A thickness of the film is preferably 100 $\sim$ 2000 Å.

The magneto-optical effect of the rare earth-iron group amorphous alloy thin film at a wavelength in a visible band mainly depends on the magneto-optical effect of the iron group element. An iron group magnetic moment near a room temperature is maximum for a composition of $Fe_{.70}Co_{.30}$. If Co is less, the iron group magnetic moment materially decreases, and if Co is more, the iron group magnetic moment somewhat decreases. Accordingly, the proportion of Co to Fe is preferably around 30 atom % or larger.

### Example 1

Disk shaped magneto-optical recording media having a diameter of 130 mm were formed for the prior art and the present invention by a conventional magnetron sputtering method, and the recording sensitivities, the readout characteristics and the durabilities were examined. An argon gas pressure was approximately 0.15 Pa. SiN protective films were formed on the opposite sides of the 700 Å recording medium. The readout layer in the prior art medium was $Gd_{.22}(Fe_{.70}Co_{.30})_{.78}$ having a film thickness of 400 Å, and the record layer was $Tb_{.22}(Fe_{.92}Co_{.08})_{.78}$ having a film thickness of 400 Å. The readout layer in the present invention was $(Gd_{.22}(Fe_{.70}Co_{.30})_{.78})_{.97}Cr_{.03}$ having a film thickness of 400 Å, and the record layer was $(Tb_{.22}(Fe_{.85}Co_{.15})_{.78})_{.93}Cr_{.07}$ having a film thickness of 400 Å. The substrate was made of polycarbonate. The Curie point of the record layer was approximately 170°C for both the prior art and the present invention.

At a rotating speed of 1500 rpm, a radius of 35 mm and a biasing magnetic field of 200 Oe, a laser power of 4.6 mW was required for recording on the prior art medium while a laser power of 4.7 mW is required for recording on the medium of the present invention. There was no difference between the recording characteristics. A readout CN ratio at 3.08 MHz was 49 dB for the prior art medium while it was also 49 dB for the present medium. Thus, there is also no difference between the readout characteristic.

In the durability test which used 1 N NaCl aqueous solution, a considerable number of pinholes were observed after 15 minutes immersion of the prior art medium, but no pinhole was observed even after 30 minutes immersion of the present medium.

Example 2

The record layer in the prior art medium was $Dy_{.21}(Fe_{.82}Co_{.18})_{.79}$ having a film thickness of 400 Å, and the record layer of the present medium was $(Dy_{.21}(Fe_{.75}Co_{.25})_{.79})_{.93}Cr_{.07}$ having a film thickness of 400 Å. Other conditions were identical to those of the Example 1. The Curie point of the record layer was approximately 170°C for both the prior art medium and the present medium.

At a rotation speed of 1500 rpm, a radius of 35 mm and a biasing magnetic field of 200 Oe, a laser power of 4.8 mW was required for recording on the prior art medium while a laser power of 4.7 mW was required for recording on the present medium. There was no difference between the recording characteristics. A readout CN ratio at 3.08 MHz was 48 dB for the prior art medium while it was also 48 dB for the present medium. There was also no difference between the readout characteristics.

In the durability test which used 1 N NaCl aqueous solution, a considerable number of pinholes were observed after 15 minutes immersion of the prior art medium while no pinhole was observed even after 30 minutes immersion of the present medium.

Example 3

The record layer in the prior art medium was $(Tb_{.50}Dy_{.50})_{.22}(Fe_{.87}Co_{.13})_{.78}$ having a film thickness of 400 Å, and the record layer of the present invention was $((Tb_{.50}Dy_{.50})_{.22}(Fe_{.80}Co_{.20})_{.78})_{.93}Cr_{.07}$ having a film thickness of 400 Å. The other conditions were identical to those of the Example 1. The Curie point of the record layer was approximately 170°C for both the prior art medium and the present medium.

At a rotating speed of 1500 rpm, a radius of 35 mm and a biasing magnetic field of 200 Oe, a laser power of 4.5 mW was required for recording on the prior art medium while a laser power of 4.4 mW was required for recording on the present medium. There was no difference between the recording characteristics. A readout CN ratio at 3.08 MHz was 48 dB for the prior art medium while it was also 48 dB for the present medium. There was also no difference between the readout characteristics.

In the durability test which used 1 mol NaCl aqueous solution, a considerable number of pinholes were observed after 15 minutes immersion of the prior art medium while no pinhole was observed even after 30 minutes immersion of the present medium.

In the above examples, the readout layer was Gd-Fe-Co-Cr. Alternatively, R-Fe-Co-Cr (where R is Tb and/or Dy) may be used. The composition in atomic number ratio is preferably

$$\{(Tb_{1-x}Dy_x)_z(Fe_{1-y}Co_y)_{1-z}\}_{1-w}Cr_w$$

where $0 \leq x \leq 1$, $0.1 < y < 1$, $0.1 \leq z \leq 0.4$, $0 < w \leq 0.15$, and the proportion of Co in the record layer is smaller than the proportion of Co in the readout layer and the proportion of Cr in the record layer is larger than the proportion of Cr in the readout layer. Examples thereof are shown below.

Example 4

Disk shaped magneto-optical recording having a diameter of 130 mm were manufactured for the prior art and the present invention by a conventional magnetron sputtering method. The recording sensitivities, the readout characteristics and the durabilities were examined. Argon gas pressure was approximately 0.15 Pa. SiN protective layers were formed on the opposite sides of the 700 Å recording medium. The readout layer in the prior art medium was $Gd_{.22}(Fe_{.70}Co_{.30})_{.78}$ having a film thickness of 200 Å, and the record layer was $Tb_{.22}(Fe_{.92}Co_{.08})_{.78}$ having a film thickness of 600 Å. The readout layers in the present medium was $(Tb_{.18}(Fe_{.70}Co_{.30})_{.82})_{.97}Cr_{.03}$ having a film thickness of 200 Å, and the record layer was $(Tb_{.22}(Fe_{.85}Co_{.15})_{.78})_{.93}Cr_{.07}$ having a film thickness of 600 Å. The substrate was made of polycarbonate. The Curie point of the record layer was approximately 170°C for both the prior art and the present invention.

At a rotating speed of 1500 rpm. a radius of 35 mm and a biasing magnetic field of 200 Oe, a laser power of 4.9 mW was required for recording on the prior art medium while a laser power of 4.6 mW was required for recording on the present medium. There was no difference between the recording characteristics. A readout CN ratio at 3.08 MHz was 49 dB for the prior art medium while it was also 48 dB for the present medium. There was also no difference between the readout characteristics.

In the durability test which used 1 N NaCl aqueous solution, a considerable number of pinholes were observed after 15 minutes immersion of the prior art medium while no pinhole was observed even after 30 minutes immersion of the present medium.

## Example 5

The record layer in the prior art medium was $Dy_{.21}(Fe_{.82}Co_{.18})_{79}$ having a film thickness of 600 Å. The record layer in the present invention was $Dy_{.21}(Fe_{.75}Co_{.25})_{.79})_{.93}Cr_{.07}$ having a film thickness of 600 Å and the readout layer was $(Dy_{.18}(Fe_{.70}Co_{.30})_{.82})_{.97}Cr_{.03}$ having a film thickness of 200 Å. The other conditions were identical to those of the Example 4. The Curie point of the record layer was approximately 170°C for both the prior art medium and the present medium.

At a rotating speed of 1500 rpm, a radius of 35 mm and a biasing magnetic field of 200 Oe, a laser power of 4.8 mW was required for recording on the prior art medium while a laser power of 4.8 mW was required for recording on the present medium. There was no difference between the recording characteristics. A readout CN ratio at 3.08 MHz was 48 dB for the prior art medium while it was 49 dB for the present medium. There was also no difference between the readout characteristics.

In the durability test which used 1N NaCl aqueous solution, a considerable number of pinholes were observed after 15 minutes immersion of the prior art medium while no pinhole was observed even after 30 minutes immersion of the present medium.

## Example 6

The record layer in the prior art medium was $(Tb_{.50}Dy_{.50})_{.22}(Fe_{.87}Co_{.13})_{.78}$ having a film thickness of 600 Å. The record layer of the present invention was $((Tb_{.50}Dy_{.50})_{.22}(Fe_{.80}Co_{.20})_{.78})_{.93}Cr_{.07}$ having a film thickness of 600 Å and the readout layer was $((Tb_{.60}Dy_{.40})_{.18}(Fe_{.70}Co_{.30})_{.82})_{.97}Cr_{.03}$ having a film thickness of 200 Å. The other conditions were identical to those of the Example 1. The Curie point of the record layer was approximately 170°C for both the prior art medium and the present medium.

At a rotating speed of 1500 rpm, a radius of 35 mm and a biasing magnetic field of 200 Oe, a laser power of 4.8 mW was required for recording on the prior art medium while a laser power of 4.7 mW was required for recording on the present medium. There was no difference between the recording characteristics. A readout CN ratio at 3.08 MHz was 47 dB for the prior art medium while it was also 47 dB for the present medium. There was also no difference between the readout characteristics.

In the durability test which used 1 N NaCl aqueous solution, a considerable number of pinholes were observed after 15 minutes immersion of the prior art medium while no pinhole was observed even after 30 minutes immersion of the present medium.

The improvement of the stability of the recorded information is now discussed.

In the exchange coupled two-layer film for the magneto-optical recording medium, it has been found by the inventors of the present invention that the factors which affect to the stability of the recorded information include the Curie point of the record layer, the apparent coercive force of the record layer, the film thicknesses of the respective layers, and the coercive force of the readout layer.

The first factor which affects to the stability of the recorded information is the Curie point of the record layer. The higher is the Curie point is, the higher is the stability of the recorded information but the lower is the recording sensitivity. A preferable Curie point of the record layer is higher than 100°C, more preferably higher than 130°C, and most preferably higher than 150°C.

The second factor which affects to the stability of the recorded information is the apparent coercive force of the record layer. In order to stabilize the recorded information based on this factor, it is preferable to use an exchange coupled two-layer film in which the record layer has the dominant rare earth sub-lattice magnetization and the readout layer has the dominant iron group sub-lattice magnetization (the medium (4) described above), and the record layer has the compensation temperature between the room temperature and the Curie point. Between the room temperature and the compensation temperature, the apparent coercive force of the record layer is larger than the coercive force of the single layer because of the two-layer structure, and the stability of the record increases. However, between the compensation temperature and the Curie point, the apparent coercive force decreases.

The third factor which affects to the stability of the recorded information is the film thicknesses of the respective layers. The stability of the record is improved by making the film thickness of the readout layer thinner and the film thickness of the record layer thicker, for example, 400 Å and 600 Å, or 300 Å and 700 Å than making the readout layer and the record layer equal thickness, for example, 500 Å and 500 Å. However, if the film thickness of the readout layer is too thin, the magneto-optical effect is reduced and the reproducing characteristic is deteriorated.

As described above, it has been found that the coercive force of the readout layer is also pertinent to the stability of the recorded information, in addition to the above-mentioned factors.

In the past, it has been considered preferable to use the element of the S state as the rare earth element of the readout layer in order to reduce the coercive force. The element of the S state includes Eu and Gd, but Gd is primarily used because Eu is highly reactive.

Of the alloys which use Gd, Gd-Fe is suitable for the readout layer because the Curie point is as high as 220°C. By adding Co, the Curie point is further raised and the magneto-optical Kerr rotation angle increases so that the readout characteristic is improved. However, in $Gd-(Fe_{1-y}Co_y)$, if $y \geqq 30$, the iron group magnetic moment decreases. Accordingly, it is preferable that $y \leqq 50$.

In the present embodiment, Tb or Dy which is the non-S state element is added to Gd-Fe or Gd-Fe-Co which is used for the readout layer so that the stability of the recorded information is further improved due to the change in the coercive force of the readout layer.

From the above consideration, a preferable material of the readout layer is Gd-R-Fe-Co-Cr (where R is Tb and/or Dy). A composition in atomic number ratio is

$$((Gd_{1-x}R_x)_z(Fe_{1-y}Co_y)_{1-z})_{1-w}Cr_w$$

where $0.1 \leqq x \leqq 0.9$, $0.1 < y < 1$, $0.1 \leqq z \leqq 0.4$, $0 < w \leqq 0.15$, and the proportion of Co in the record layer is smaller than the proportion of Co in the readout layer and the proportion of Cr in the record layer is larger than the proportion of Cr in the readout layer. Examples therefor are shown below.

Example 7

Disk shaped magneto-optical recording media having a diameter of 130 mm were formed for the prior art and the present invention by a conventional magnetron sputtering method, and the recording sensitivities, the readout characteristics and the durabilities were examined. An argon gas pressure was approximately 0.15 Pa. SiN protective films were formed on the opposite sides of the 700 Å recording medium. The readout layer in the prior art medium was $Gd_{.22}(Fe_{.70}Co_{.30})_{.78}$ having a film thickness of 300 Å, and the record layer was $Tb_{.}(Fe_{.92}Co_{.08})_{.78}$ having a film thickness of 500 Å. The readout layer in the present invention was $((Gd_{.50}Tb_{.50})_{.20}(Fe_{.70}Co_{.30})_{.80})_{.97}Cr_{.03}$ having a film thickness of 300 Å, and the record layer was $(Tb_{.22}(Fe_{.85}Co_{.15})_{.78})_{.93}Cr_{.07}$ having a film thickness of 500 Å. The substrate was made of polycarbonate. The Curie point of the record layer was approximately 170°C for both the prior art and the present invention.

At a rotating speed of 1500 rpm, a radius of 35 mm and a biasing magnetic field of 200 Oe, a laser power of 4.7 mW was required for recording on the prior art medium while a laser power of 4.8 mW is required for recording on the medium of the present invention. There was no difference between, the recording characteristics. A readout CN ratio at 3.08 MHz was 49 dB for the prior art medium while it was 48 dB for the present medium. Thus, there is also no difference between the readout characteristic.

In the durability test which used 1 N NaCl aqueous solution, a considerable number of pinholes were observed after 15 minutes immersion of the prior art medium, but no pinhole was observed even after 30 minutes immersion of the present medium.

The maximum reproduction power without the degradation of the recorded information under the magnetic field of 600 Oe was as low as 1.4 mW for the prior art medium while it was as high as 1.8 mW for the present medium.

Example 8

The record layer in the prior art medium was $Dy_{.21}(Fe_{.82}Co_{.18})_{.79}$ having a film thickness of 500 Å, and the record layer of the present medium was $(Dy_{.21}(Fe_{.75}Co_{.25})_{.79})_{.93}Cr_{.07}$ having a film thickness of 500 Å, and the readout layer was $(Gd_{.50}Dy_{.50})_{.20}(Fe_{.70}Co_{.30})_{.80})_{.97}Cr_{.03}$ having a film thickness of 300 Å. Other conditions were identical to those of the Example 1. The Curie point of the record layer was approximately 170°C for both the prior art medium and the present medium.

At a rotation speed of 1500 rpm, a radius of 35 mm and a biasing magnetic field of 200 Oe, a laser power of 4.6 mW was required for recording on the prior art medium while a laser power of 4.7 mW was required for recording on the present medium. There was no difference between the recording characteristics. A readout CN ratio at 3.08 MHz was 48 dB for the prior art medium while it was also 48dB for the present medium. There was also no difference between the readout characteristics.

In the durability test which used 1 N NaCl aqueous solution, a considerable number of pinholes were observed after 15 minutes immersion of the prior art medium while no pinhole was observed even after 30 minutes immersion of the present medium.

The maximum reproduction power without the degradation of the recorded information under the magnetic field of 600 Oe was as low as 1.3 mW for the prior art medium while it was as high as 1.9 mW for the present medium.

Example 9

The record layer in the prior art medium was $(Tb_{.50}Dy_{.50})_{.22}(Fe_{.87}Co_{.13})_{.78}$ having a film thickness of 500 Å, and the record layer of the present medium was $((Tb_{.50}Dy_{.50})_{.19}(Fe_{.80}Co_{.20})_{.81})_{.93}Cr_{.07}$ having a film thickness of 500 Å, and the readout layer was $((Gd_{.34}Tb_{.33}Dy_{.33})_{.22}(Fe_{.70}Co_{.30})_{.78})_{.97}Cr_{.03}$ having a film thickness of 300 Å. Other conditions were identical to those of the Example 1. The Curie point of the record layer was approximately 170°C for both the prior art medium and the present medium.

At a rotation speed of 1500 rpm, a radius of 35 mm and a biasing magnetic field of 200 Oe, a laser power of 4.9 mW was required for recording on the prior art medium while a laser power of 5.0 mW was required for recording on the present medium. There was no difference between the recording characteristics. A readout CN ratio at 3.08 MHz was 48 dB for the prior art medium while it was 50 dB for the present medium. There was also no difference between the readout characteristics.

In the durability test which used 1 N NaCl aqueous solution, a considerable number of pinholes were observed after 15 minutes immersion of the prior art medium while no pinhole was observed even after 30 minutes immersion of the present medium.

The maximum reproduction power without the degradation of the recorded information under the magnetic field of 600 Oe was as low as 1.4 mW for the prior art medium while it was as high as 2.1 mW for the present medium.

## Claims

1. A magneto-optical recording medium, comprising:

a first magnetic layer mainly concerned with recording; and

a second magnetic layer said second magnetic layer being mainly concerned with reproduction, said second magnetic layer being exchange-coupled to said first magnetic layer and having a higher Curie point and a lower coercive force at room temperature than those of said first magnetic layer,

characterised in that:

said first magnetic layer consists of an amorphous alloy having a composition of:

$$((Tb_{1-x}Dy_x)_z(Fe_{1-y}Co_y)_{1-z})_{1-w}Cr_w$$

wherein

$0 \leqq x \leqq 1, 0 \leqq y \leqq 0.5, 0.1 \leqq z \leqq 0.4, 0.01 \leqq w \leqq 0.3$ and said second magnetic layer consists of an amorphous alloy having a composition of:

$$((Tb_{1-x}Dy_x)_z(Fe_{1-y}Co_y)_{1-z})_{1-w}Cr_w$$

wherein

$0 \leqq x \leqq 1, 0.1 \leqq y \leqq 1, 0.1 \leqq z \leqq 0.21, 0 < w \leqq 0.15$,

or

$$((Gd_{1-x}R_x)_z(Fe_{1-y}Co_y)_{1-z})_{1-w}Cr_w$$

wherein R is at least one element selected from Tb and Dy, and

$0.1 \leqq x \leqq 0.9, 0.1 \leqq y \leqq 1, 0.1 \leqq z \leqq 0.22, 0 < w \leqq 0.15$,

and that the composition ratio of Co in said first magnetic layer is less than that in said second magnetic layer,

and the composition ratio of Cr in said first amorphous magnetic layer is greater than the composition ratio of Cr in said second magnetic layer.

2. A magneto-optical recording medium according to claim 1 wherein said first magnetic layer has a Curie point of 150-200°C.

3. A magneto-optical recording medium according to claim 1 wherein said second magnetic layer has a thickness of 100-2000 Å.

4. A magneto-optical recording medium according to claim 1 further comprising a substrate bearing said first and second magnetic layers thereon.

## Patentansprüche

1. Magnetooptischer Aufzeichnungsträger, umfassend:

eine erste magnetische Schicht, die sich hauptsächlich mit dem Aufzeichnen befaßt, und

eine zweite magnetische Schicht, wobei die zweite magnetische Schicht sich hauptsächlich mit der Wiedergabe befaßt und wobei die zweite magnetische Schicht mit der ersten magnetischen Schicht austausch-gekoppelt ist und einen höheren Curie-Punkt und eine geringere Koerzitivkraft bei Raumtemperatur als die erste magnetische Schicht aufweist,

**dadurch gekennzeichnet, daß:**

die erste magnetische Schicht aus einer amorphen Legierung mit einer Zusammensetzung:

$$((Tb_{1-x}Dy_x)_z(Fe_{1-y}Co)_{1-z})_{1-w}Cr_w$$

besteht, wobei

$0 \leqq x \leqq 1, 0 \leqq y \leqq 0.5, 0.1 \leqq z \leqq 0.4, 0.01 \leqq w \leqq 0.3$

und die zweite magnetische Schicht aus einer amorphen Legierung mit einer Zusammensetzung:

$$((Tb_{1-x}Dy_x)_z(Fe_{1-y}Co_y)_{1-z})_{1-w}Cr_w$$

besteht, wobei

$0 \leqq x \leqq 1, 0.1 \leqq y \leqq 1, 0.1 \leqq z \leqq 0.21, 0 < w \leqq 0.15$,

oder aus

$$((Gd_{1-x}R_x)_z(Fe_{1-y}Co_y)_{1-z})_{1-w}Cr_w$$

besteht, wobei R mindestens ein Element darstellt, ausgewählt aus Tb und Dy, und

$0.1 \leqq x \leqq 0.9, 0.1 \leqq y \leqq 1, 0.1 \leqq z \leqq 0.22, 0 < w \leqq 0.15$,

und daß das Zusammensetzungsverhältnis des Co in der ersten magnetischen Schicht kleiner ist als das in der zweiten magnetischen Schicht,

und das Zusammensetzungsverhältnis des Cr in der ersten amorphen magnetischen Schicht größer ist als das Zusammensetzungsverhältnis des Cr in der zweiten magnetischen Schicht.

2. Magnetooptischer Aufzeichnungsträger nach Anspruch 1, wobei die erste magnetische Schicht einen Curie-Punkt von 150 - 200°C aufweist.

3. Magnetooptischer Aufzeichnungsträger nach Anspruch 1, wobei die zweite magnetische Schicht eine Dicke von 100 - 2000 Å aufweist.

4. Magnetooptischer Aufzeichnungsträger nach Anspruch 1, der ferner ein Substrat umfaßt, das die ersten und zweiten magnetischen Schichten trägt.

**Revendications**

1. Support d'enregistrement magnéto-optique, comportant :

une première couche magnétique destinée principalement à l'enregistrement ; et

une seconde couche magnétique, ladite seconde couche magnétique destinée principalement à la reproduction, ladite seconde couche magnétique étant en couplage d'échange avec ladite première couche magnétique et ayant un point de Curie plus élevé et une force de coercition plus faible à la température ambiante que ceux de ladite première couche magnétique,

caractérisé en ce que :

ladite première couche magnétique est constituée d'un alliage amorphe ayant pour composition :

$$((Tb_{1-x}Dy_x)_z(Fe_{1-y}Co_y)_{1-z})Cr_w$$

où

$0 \leqq x \leqq 1$, $0 \leqq y \leqq 0,5$, $0,1 \leqq z \leqq 0,4, 0,01 \leqq w \leqq 0,3$

et ladite seconde couche magnétique est constituée d'un alliage amorphe ayant pour composition :

$$((Tb_{1-x}Dy_x)_z(Fe_{1-y}Co_y)_{1-z})_{1-w}Cr_w$$

où

$0 \leqq x \leqq 1$, $0,1 \leqq y \leqq 1$, $0,1 \leqq z \leqq 0,21$, $0 < w \leqq 0,15$,

ou

$$((Gd_{1-x}R_x)_z(Fe_{1-y}Co_y)_{1-z})_{1-w}Cr_w$$

où R est au moins un élément choisi entre Tb et Dy, et

$0,1 \leqq x \leqq 0,9$, $0,1 \leqq y \leqq 1$, $0,1 \leqq z \leqq 0,22$, $0 < w \leqq 0,15$,

et en ce que le rapport de composition de Co dans ladite première couche magnétique est inférieur à celui présent dans ladite seconde couche magnétique,

et le rapport de composition de Cr dans ladite première couche magnétique amorphe est supérieur au rapport de composition de Cr dans ladite seconde couche magnétique.

2. Support d'enregistrement magnéto-optique selon la revendication 1, dans lequel ladite première couche magnétique a un point de Curie de 150-200°C.

3. Support d'enregistrement magnéto-optique selon la revendication 1, dans lequel ladite seconde couche magnétique a une épaisseur de 100-2000 Å.

4. Support d'enregistrement magnéto-optique selon la revendication 1, comportant en outre un substrat portant lesdites première et seconde couches magnétiques.

FIG. 1